(19) **Europäisches Patentamt / European Patent Office / Office européen des brevets**

(11) **EP 2 751 924 B1**

(12) **FASCICULE DE BREVET EUROPEEN**

(45) Date de publication et mention
de la délivrance du brevet:
**01.01.2020  Bulletin 2020/01**

(21) Numéro de dépôt: **12773117.2**

(22) Date de dépôt: **28.08.2012**

(51) Int Cl.:
*H02P 9/04* (2006.01)    *H02P 9/10* (2006.01)
*H02P 9/30* (2006.01)    *G05D 17/00* (2006.01)
*H02H 7/06* (2006.01)    *H02K 19/36* (2006.01)
*H02P 1/00* (2006.01)

(86) Numéro de dépôt international:
**PCT/IB2012/054401**

(87) Numéro de publication internationale:
**WO 2013/030759 (07.03.2013 Gazette 2013/10)**

(54) **PROCÉDÉ DE RÉGULATION D'UN GROUPE ÉLECTROGÈNE**

VERFAHREN ZUR REGELUNG EINES GENERATORSATZES

METHOD FOR REGULATING A GENERATOR SET

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **01.09.2011  FR 1157722**

(43) Date de publication de la demande:
**09.07.2014  Bulletin 2014/28**

(73) Titulaire: **Moteurs Leroy-Somer**
**16915 Angouleme (FR)**

(72) Inventeurs:
• **ANDREJAK, Jean-Marie**
**F-16710 Saint Yrieix (FR)**

• **MOSER, Samuel**
**F-16160 Gond-pontouvre (FR)**
• **BETGE, Patrice**
**F-16340 L'isle D'espagnac (FR)**

(74) Mandataire: **Nony**
**11 rue Saint-Georges**
**75009 Paris (FR)**

(56) Documents cités:
**FR-A- 1 322 775          FR-A1- 2 321 796
US-A1- 2007 228 735**

EP 2 751 924 B1

**Description**

La présente invention concerne la régulation des alternateurs des groupes électrogènes.

Un groupe électrogène est constitué par l'assemblage d'un moteur thermique et d'un alternateur. Afin de fournir une tension et une fréquence nominales, à la fois le moteur et l'alternateur sont équipés de moyens de régulation. Le moteur thermique est équipé d'un régulateur de vitesse électronique, intégré au système d'injection de carburant du moteur. La régulation de la vitesse du moteur repose entre autres sur la mesure de la vitesse de rotation de l'arbre du moteur, par exemple par un capteur comptant par unité de temps le nombre de dents d'une couronne dentée passant devant le capteur.

Le calculateur d'injection du régulateur de vitesse détermine grâce au signal délivré par ce capteur le niveau d'injection de carburant de façon à maintenir la vitesse à une valeur prédéfinie, mais n'a pas une connaissance directe du niveau de charge qui est appliqué au moteur, car aucun moyen économique n'existe pour informer le calculateur de ce niveau de charge.

Chaque variation de charge appliquée au moteur, que ce soit une augmentation ou une diminution, se traduit par une diminution ou une augmentation transitoire du régime moteur que le régulateur de vitesse tente de corriger par un niveau d'injection adéquat.

Dans les groupes électrogènes connus, c'est seulement grâce à la connaissance de la vitesse et du niveau d'injection que le régulateur détermine le niveau de charge qui est appliqué au moteur.

Le couple $C$ demandé au moteur thermique est directement proportionnel au courant $I$ en sortie de l'alternateur. En effet, la loi de puissance $P$ du moteur thermique est :

$$P = C.w,$$

où $w$ est la vitesse de rotation du moteur.

La loi de puissance P de l'alternateur est :

$$P = U.I.cos(\varphi),$$

où $U$ est la tension de sortie de l'alternateur et $\varphi$ le déphasage entre le courant $I$ et la tension $U$.

Le moteur thermique et l'alternateur étant liés mécaniquement, on peut écrire, au rendement prêt de l'accouplement, que :

$$C.w = U.I.cos(\varphi).$$

Lors de l'application d'une forte charge active, $cos(\varphi)$ devient proche de 1, et la tension de l'alternateur chute. L'alternateur est équipé d'un régulateur de tension qui corrige rapidement cette chute de tension en augmentant le courant dans la roue polaire.

La variation de la charge se traduit également par une chute de vitesse, car le couple $C$ demandé au moteur thermique augmente. Le moteur étant incapable de répondre instantanément à cette demande, sa vitesse $w$ chute, car une partie du couple $C$ est puisée dans la réserve d'énergie cinétique en rotation.

De façon connue, afin d'éviter de dépasser le couple maximum que l'on peut demander au moteur, le régulateur de tension, en fonction de la fréquence, fait chuter la tension afin de maintenir la demande de couple constante au niveau du moteur. Quand la vitesse $\omega$ baisse, le régulateur de tension fait diminuer la tension de sortie $U$ de manière proportionnelle de telle sorte que le couple $C$ reste constant.

Cette stratégie est efficace pour les moteurs dits d'ancienne génération, tels que les moteurs atmosphériques ou de forte inertie, et pour les augmentations de charge faibles à modérées.

Or, les moteurs à turbocompresseur sont de plus en plus utilisés au sein des groupes électrogènes. Un inconvénient de ce type de moteur est la dégradation de ses performances si la turbocompression ne peut pas être lancée correctement.

Or, une augmentation brutale de la charge est susceptible de ralentir trop fortement le moteur pour un fonctionnement correct de celui-ci. Lors du fonctionnement à vide, la pression d'admission d'air est proche de la pression atmosphérique mais dès que l'augmentation de la charge est appliquée au groupe électrogène, la vitesse du moteur chute à un tel point que, malgré la réaction du régulateur de vitesse sur le système d'injection, le flux de gaz d'échappement n'est pas suffisant pour lancer la ou les turbines des turbocompresseurs à leur régime de fonctionnement. Ces derniers sont alors incapables de faire augmenter la pression d'admission, nécessaire pour que le moteur soit capable d'accélérer et de retrouver sa vitesse nominale. Il existe donc un point de non-retour qu'il faut éviter d'atteindre.

Une solution connue, appelée LOAD ACCEPTANCE MODULE, consiste à faire chuter la tension non plus proportionnellement à la vitesse mais de manière brutale, pratiquement dès le début de la chute de vitesse, au niveau de ce que l'on appelle le "coude". La tension $U$ étant brusquement diminuée, le couple $C$ demandé au moteur est également diminué, facilitant la reprise de vitesse et son retour au point de fonctionnement.

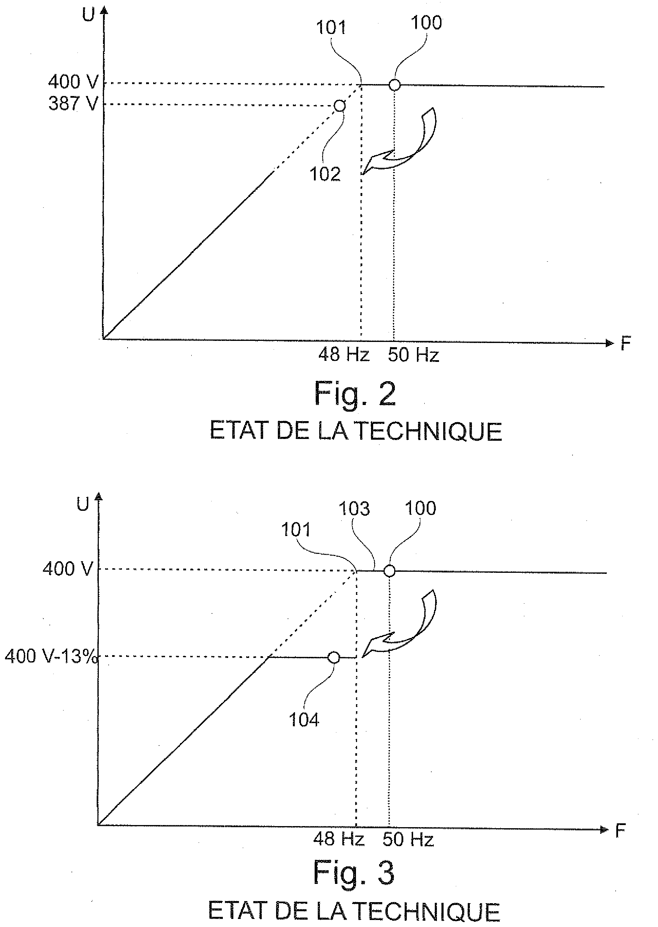

Le point de fonctionnement nominal 100 d'un groupe électrogène selon l'art antérieur est représenté sur la courbe de la figure 2, correspondant par exemple, comme illustré, à une tension $U$ en sortie de l'alternateur égale à 400V et une fréquence $F$ égale à 50 Hz.

Lorsqu'une augmentation de la charge a lieu, la vitesse $w$ du moteur thermique chute, la fréquence $F$ atteignant une valeur seuil de 48 Hz en un point 101 appelé « coude ». Dans la solution connue, le régulateur de tension de l'alternateur fait chuter la tension $U$ de manière proportionnelle à la vitesse *w*, afin de maintenir le couple *C* demandé au moteur constant, afin d'atteindre un nouveau point de fonctionnement 102.

Pour pallier aux inconvénients de cette méthode, énoncés précédemment, une variante d'une méthode de régulation selon l'art antérieur est illustrée sur la figure 3.

La dérivée de la vitesse du moteur est mesurée constamment, par exemple au point 103. Lorsqu'une augmentation de la charge a lieu et que la vitesse devient inférieure à la valeur de seuil 101, le régulateur de tension de l'alternateur fait chuter la tension *U* non plus de manière proportionnelle à la vitesse *w*, mais de manière brutale et fixe, dès le début de la chute de vitesse, en deçà du point 101. Dans l'exemple illustré, la tension *U* est ainsi abaissée de 13% au point de fonctionnement 104.

La valeur de la chute de tension est fixe quel que soit le niveau d'augmentation de la charge, ce qui peut poser un problème lors de faibles augmentations notamment, la chute de tension n'étant pas toujours adaptée à l'augmentation de la charge appliquée au groupe électrogène.

Il est connu du brevet US 5 703 410 de contrôler le courant d'excitation d'un alternateur et l'injection de carburant à partir de la connaissance de la tension redressée en sortie de l'alternateur.

Il est également connu de la demande EP 1 938 447 de commander l'actionneur d'admission de carburant d'un groupe électrogène grâce à un dispositif de contrôle délivrant un signal de commande se substituant à un signal de sortie du régulateur de vitesse lorsqu'une variation de charge est détectée.

Il est connu de la demande FR 2 321 796 de connecter, dans une machine électrique, un circuit résistif à l'inducteur principal, et d'utiliser un dispositif de commutation pour diriger le courant inducteur principal dans ce circuit résistif

La demande US 2007/0228735 A1 divulgue un système de production d'énergie dans lequel un dispositif de contrôle agit sur un générateur pour changer sa tension de sortie en réponse à une variation de la vitesse de rotation. Dans un exemple, le dispositif de contrôle agit directement sur un pont de redressement commandé (SCR) et son contrôle prévaut sur la commande effectuée par le régulateur de tension. Dans cette situation, le régulateur de tension ne peut plus jouer son rôle et part en saturation complète. Lors du retour au fonctionnement normal, un à-coup aura lieu tant que le régulateur de tension ne se sera pas recalé.

Il existe un besoin pour améliorer encore les performances des groupes électrogènes, notamment lors d'augmentations de la charge, afin entre autres de faciliter l'utilisation de moteurs à turbocompresseur.

L'invention vise à répondre au moins en partie à ce besoin et y parvient, selon l'un de ses aspects, grâce à un procédé de régulation de la tension de sortie de l'alternateur d'un groupe électrogène selon la revendication 1.

Ainsi, le procédé met en œuvre un régulateur de tension qui surveille en permanence la tension de sortie de l'alternateur et ajuste le courant dans la roue polaire afin de maintenir la tension de sortie de l'alternateur à la tension de consigne. Si une nouvelle variation de charge se produit, le régulateur de tension permet de garder la tension de sortie de l'alternateur en correspondance avec la tension de consigne qui lui est fixée.

Ceci permet, lors de variations de charge, d'avoir une réponse plus performante que dans les solutions connues. En effet, la réponse est pondérée et adaptée à la variation de vitesse mesurée. La variation de la vitesse du groupe électrogène est réduite et revient dans des conditions normales de fonctionnement plus rapidement que dans les solutions connues.

Le contrôle de la tension de sortie de l'alternateur lors d'une augmentation de la charge s'effectue simplement en transmettant un changement de tension de consigne au régulateur ; celui-ci conserve son rôle de régulateur et commande le courant dans la roue polaire de façon à ce que la tension de sortie soit égale à la nouvelle tension de consigne.

Grâce à l'invention, le courant dans la roue polaire est diminué de façon adéquate même en cas de faible charge appliquée et le couple du moteur est réduit de manière appropriée pendant la durée nécessaire à l'augmentation de la puissance du moteur.

La régulation de tension étant liée à la constante de temps de l'excitatrice et la régulation de vitesse étant liée à la constante de temps mécanique du moteur, beaucoup plus importante, l'invention permet de répondre à cette problématique des constantes de temps, grâce au fait que les deux régulateurs sont placés en série plutôt qu'en parallèle.

L'invention permet l'application à l'alternateur d'une correction sous forme d'une chute de tension, non plus fixe comme dans l'art antérieur, mais par exemple proportionnelle à la décélération du moteur.

Plus l'augmentation de la charge est importante, plus la chute de vitesse est rapide, car, au moment de l'application de la charge, seule la réserve d'énergie cinétique en rotation peut répondre à la demande de couple. La chute de tension est alors, grâce à l'invention, suffisamment importante pour délester le moteur du couple demandé et ainsi l'aider à retrouver sa vitesse de rotation nominale.

Une fois la vitesse de rotation nominale atteinte ou suffisamment proche, notamment supérieure à un seuil prédéfini, la tension de l'alternateur est remontée progressivement jusqu'à un point de consigne, ce qui a pour effet de faire augmenter progressivement le couple demandé au moteur thermique, en fonction des possibilités de celui-ci.

La vitesse de rotation du moteur thermique peut être connue à partir de la fréquence de la tension de sortie de l'alternateur. Ainsi, la décélération du moteur peut être calculée à partir de la connaissance de la fréquence à chaque instant.

La vitesse de rotation du moteur thermique peut en variante être mesurée par un capteur de vitesse du moteur thermique ou de l'alternateur, par exemple un capteur délivrant des impulsions à une fréquence proportionnelle à la vitesse de rotation de l'arbre du moteur thermique.

La décélération est déterminée par la dérivée par rapport au temps d'une grandeur représentative de la vitesse de rotation du moteur thermique et cette dérivée peut être calculée en permanence, à intervalles réguliers, ou au moins lorsque la vitesse de rotation du moteur thermique s'approche du coude.

L'évolution de la valeur du courant dans la roue polaire en fonction de la décélération du moteur peut suivre une loi de commande prédéfinie, par exemple préenregistrée dans une table, ou calculée. Le calcul peut faire intervenir au moins un paramètre tel que le niveau de puissance au moment de l'application de la correction.

La modification du courant dans la roue polaire peut s'effectuer de façon à atteindre une tension de consigne de l'alternateur, l'écart entre la tension de consigne et la tension nominale étant fonction de la décélération, par exemple de façon linéaire ou non.

Lorsque la vitesse de rotation du moteur thermique augmente, la valeur du courant dans la roue polaire peut être modifiée de nouveau de manière à ramener la tension de sortie à sa valeur avant augmentation de la charge.

En d'autres termes, dès que la vitesse de rotation du moteur thermique augmente à nouveau, la valeur du courant dans la roue polaire peut être augmentée de manière adéquate afin que la tension augmente également.

La correction peut être appliquée à partir d'un seuil prédéfini d'augmentation de la charge, pouvant être constant ou calculé en fonction d'au moins un paramètre, par exemple le niveau de puissance. Dans un exemple, la correction est appliquée à partir d'un ralentissement du moteur en deçà d'une vitesse prédéfinie, pouvant être par exemple la vitesse nominale moins 4%, notamment une fréquence de la tension de 48 Hz pour une vitesse nominale correspondant à une fréquence nominale de 50 Hz.

La sortie de l'alternateur peut être reliée à un réseau triphasé, la vitesse nominale de rotation du moteur thermique étant par exemple de 1500 tr/min et la tension nominale de sortie entre phases de l'alternateur étant par exemple de 400V et 50 Hz. L'application d'une diminution de la tension proportionnelle à la décélération du moteur peut par exemple se faire quand la fréquence devient inférieure ou égale à 48 Hz.

Pour agir sur le courant dans la roue polaire, il est possible d'agir sur le courant d'excitation de l'excitatrice lorsque l'alternateur comporte une excitatrice ayant un stator bobiné. La modification du courant dans la roue polaire peut s'effectuer par exemple en diminuant le courant d'excitation de l'excitatrice.

Notamment, dans le cas d'un alternateur comportant une excitatrice dont le stator comporte des aimants permanents, il est possible d'agir sur le courant dans la roue polaire en disposant sur le rotor un système de commutation permettant de moduler le courant dans la roue polaire.

Dans une telle variante, l'alternateur peut comporter, au rotor, un contrôleur commandant le système de commutation. Un système de transmission, par exemple sans fil, peut communiquer avec le régulateur de tension situé au stator de l'alternateur.

Le contrôleur peut commander le système de commutation de façon à réguler la tension de sortie de l'alternateur, par exemple par une modulation de la largeur d'impulsion de la tension aux bornes de la roue polaire. Le contrôleur peut faire varier le rapport cyclique de la modulation de largeur d'impulsion en fonction de la tension recherchée en sortie de l'alternateur. Une telle variante permet d'améliorer le temps de réponse de l'alternateur lorsque la charge varie.

Le procédé de régulation selon l'invention peut se combiner avec d'autres mesures de régulation visant à améliorer le fonctionnement du groupe électrogène, par exemple des mesures visant à modifier le débit de carburant injecté dans le moteur thermique en fonction de la puissance active en sortie de l'alternateur.

L'invention a encore pour objet, selon un autre de ses aspects, un système de régulation de la tension de sortie de l'alternateur d'un groupe électrogène selon la revendication 9.

Le système de régulation peut être configuré pour abaisser la tension de l'alternateur à une valeur de consigne choisie de telle sorte que l'écart entre la tension nominale et la tension de consigne soit, par exemple, proportionnel à la décélération.

La diminution de la tension de sortie par application d'une baisse de la tension proportionnelle à la décélération peut se faire par exemple dès que la fréquence de la tension chute en deçà d'une valeur prédéfinie, par exemple 48 Hz, qui traduit l'application d'une charge au-delà d'un seuil prédéfini.

Le système de régulation peut être intégré au régulateur de tension de l'alternateur.

Toutes les caractéristiques de l'invention énumérées ci-dessus pour le procédé valent pour le système de régulation.

L'invention pourra être mieux comprise à la lecture de la description détaillée qui va suivre, d'exemples non limitatifs de mise en œuvre de celle-ci, et à l'examen du dessin annexé, sur lequel :

- la figure 1 représente un groupe électrogène selon l'invention,
- les figures 2 et 3 déjà décrites représentent des courbes tension-fréquence illustrant le fonctionnement d'un groupe électrogène selon l'art antérieur,
- les figures 4 et 5 représentent des courbes tension-fréquence illustrant le fonctionnement d'un groupe électrogène selon l'invention,

- la figure 6 représente de façon schématique la chaîne de régulation d'un groupe électrogène selon l'invention,
- la figure 7 représente un alternateur selon l'invention, pris isolément, et
- les figures 8 et 9 représentent une variante d'alternateur selon l'invention.

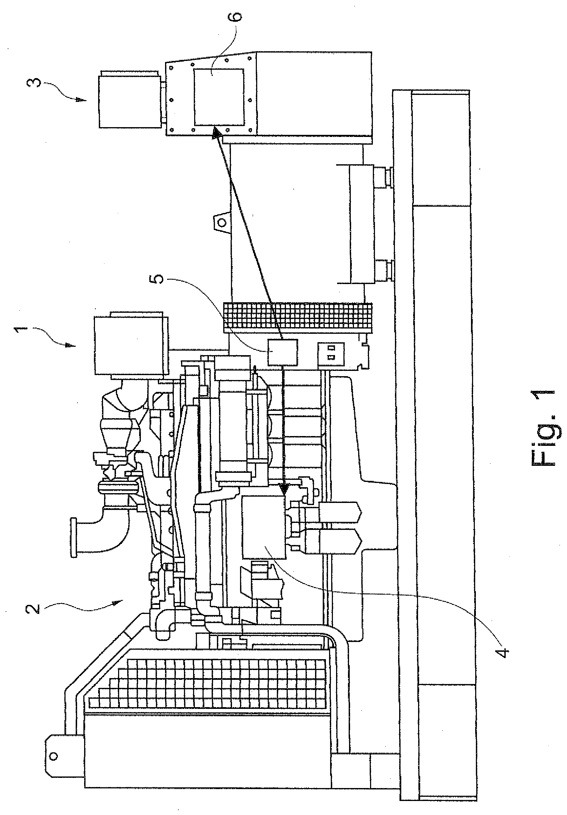

Le groupe électrogène 1 selon l'invention, illustré à la figure 1, comporte un moteur thermique 2 et un alternateur 3.

Le moteur thermique 2 est avantageusement un moteur turbocompressé, mais l'invention n'est pas limitée à un type de moteur thermique particulier.

La sortie de l'alternateur 3 est reliée par exemple à un réseau triphasé, la vitesse $w_n$ nominale de rotation du moteur thermique 2 étant par exemple de 1500 tr/min, la fréquence nominale $F_n$ étant égale par exemple à 50 Hz, et la tension nominale $U_n$ de sortie entre phases de l'alternateur étant par exemple de 400V.

Le moteur 2 comporte un régulateur de vitesse 4 comportant un calculateur d'injection qui calcule l'injection (ou la commande des gaz) du moteur afin que la vitesse de rotation $w$ soit maintenue constante autant que possible à la valeur nominale $w_n$.

Le moteur 2 comporte un capteur 5 de vitesse, pouvant être, par exemple, inductif, capacitif ou optique. Le capteur 5 est par exemple disposé devant une couronne dentée entraînée en rotation par le moteur 2 et délivre au calculateur d'injection des impulsions à une fréquence proportionnelle à la vitesse de rotation $w$.

Le régulateur de vitesse 4 calcule le niveau d'injection de carburant adéquat pour maintenir la vitesse $w$ du moteur 2 égale à sa valeur nominale $w_n$.

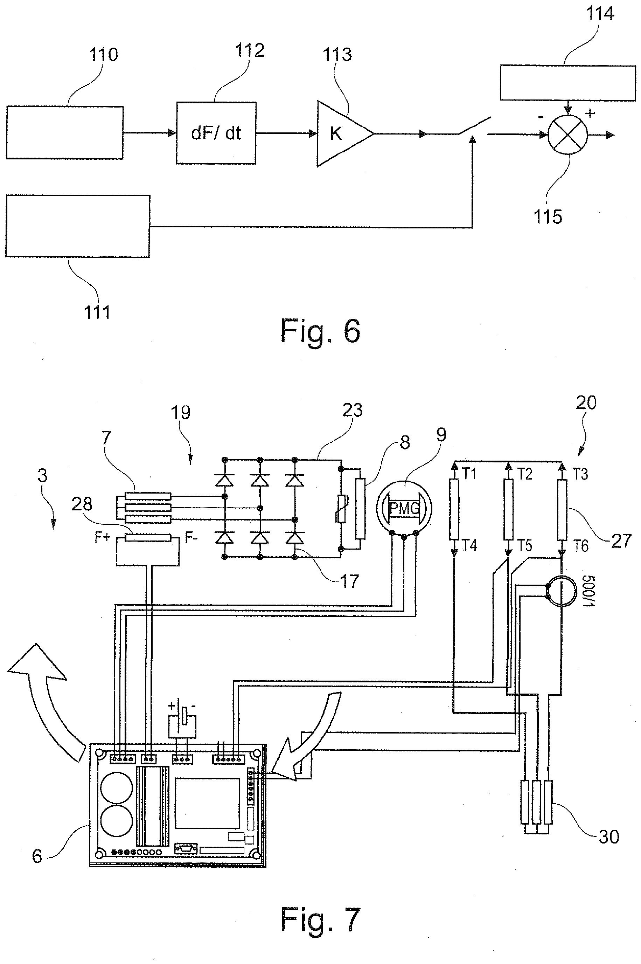

L'alternateur 3 comporte, comme illustré à la figure 7, un régulateur de tension 6 qui surveille la tension U en sortie de l'alternateur et détermine le courant à appliquer dans la roue polaire 8 pour maintenir l'amplitude de tension nominale.

Le régulateur 6 peut être alimenté par un générateur à aimants permanents 9, mais l'invention n'est pas limitée à une façon particulière d'alimenter le régulateur.

Le rotor 19 de l'alternateur 3 comporte dans l'exemple décrit un redresseur 17 composé d'un pont de diodes double alternance, alimentant à partir de l'induit d'excitatrice 7 un bus continu 23.

L'alternateur 3 comporte au stator 20 un inducteur d'excitatrice 28 et l'induit 27 de la machine principale, relié à la charge 30.

Le groupe électrogène 1 selon l'invention comporte un système de régulation de la tension de sortie de l'alternateur 3, agencé pour détecter une augmentation de la charge, à partir de la connaissance de la fréquence en sortie de l'alternateur 3.

Le système de régulation est configuré pour modifier, lorsqu'une augmentation de la charge au-delà d'un seuil prédéfini est détectée, la valeur du courant dans la roue polaire, de manière à amener la tension U de sortie de l'alternateur 3 à une valeur inférieure à celle avant augmentation de la charge.

La modification de la valeur du courant dans la roue polaire est fonction de la dérivée d'une grandeur représentative de la vitesse de rotation $w$ du moteur thermique 2.

La grandeur représentative de la vitesse de rotation $w$ du moteur thermique 2 est dans l'exemple considéré la fréquence $F$ de la tension $U$ de sortie de l'alternateur 3.

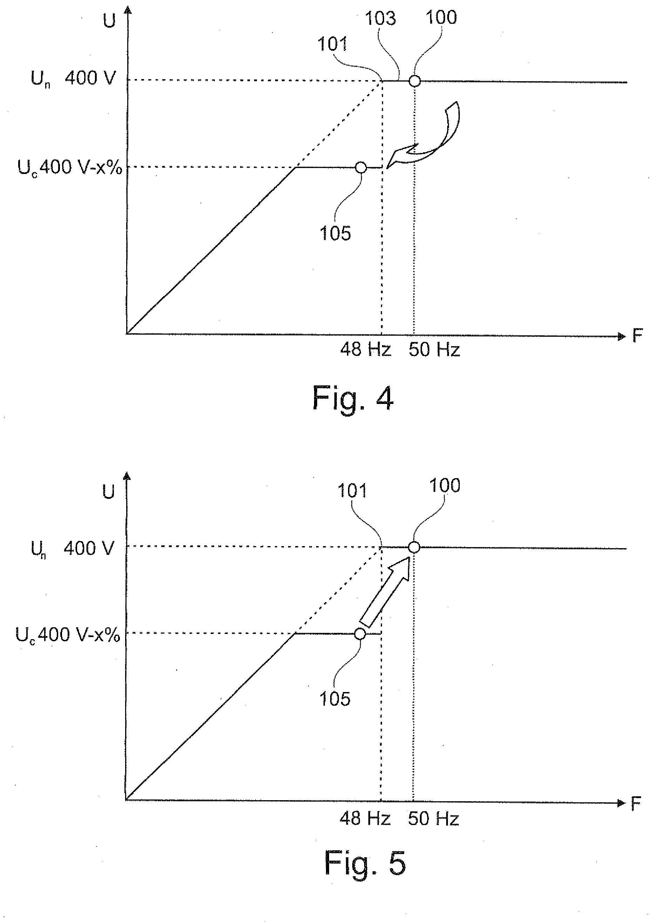

Dans un groupe électrogène selon l'invention, la chute de tension n'est pas fixe mais dépend, par exemple de façon proportionnelle, de la dérivée de la vitesse, comme illustré à la figure 4, où, lorsqu'une augmentation de la charge conduit à une diminution de la fréquence $F$ de rotation à une valeur inférieure ou égale à une valeur prédéfinie, 48 Hz dans l'exemple considéré, la tension $U$ est brutalement abaissée de x % pour atteindre un point de fonctionnement 105.

Afin d'abaisser la tension $U$ à une nouvelle valeur de consigne $U_c$, la valeur du courant dans la roue polaire est modifiée. La valeur de consigne est déterminée de telle sorte que l'écart entre la tension nominale $U_n$ et la tension de consigne $U_c$ est, par exemple, proportionnel à la dérivée de la fréquence $dF/dt$. L'évolution de la tension en fonction de la dérivée de la fréquence $dF/dt$ suit une loi de commande prédéfinie, qui peut être tabulée et peut dépendre éventuellement d'au moins un paramètre, par exemple le niveau de puissance.

La modification du courant dans la roue polaire facilite l'augmentation de la vitesse de rotation $w$ du moteur thermique 2 du fait de la diminution du couple $C$.

Une fois que la vitesse de rotation $w$ augmente, la valeur du courant $I$ dans la roue polaire peut à nouveau être modifiée, de manière à ramener la valeur de la tension $U$ de sortie à celle avant augmentation de la charge, jusqu'au point de fonctionnement nominal 100, comme illustré à la figure 5.

Comme illustré à la figure 6, la fréquence $F$ est mesurée à chaque instant à l'étape 110, sa dérivée $dF/dt$ étant calculée à l'étape 112.

En l'absence de correction appliquée, la chaîne de régulation maintient à l'étape 115 la tension de l'alternateur à une valeur de consigne 114.

La correction à appliquer est déterminée à l'étape 113.

A l'étape 111, le système détermine si la correction doit ou non être appliquée. La correction est par exemple appliquée si la fréquence $F$ de rotation a diminué de plus d'une quantité prédéfinie, par exemple est devenue inférieure ou égale à 48 Hz pour une vitesse nominale de rotation de 50 Hz, ce qui correspond à une variation de plus de 4 %.

Le régulateur de tension peut agir de façon conventionnelle sur le courant d'excitation au stator 20 pour modifier le courant dans la roue polaire et ainsi faire varier la tension *U*.

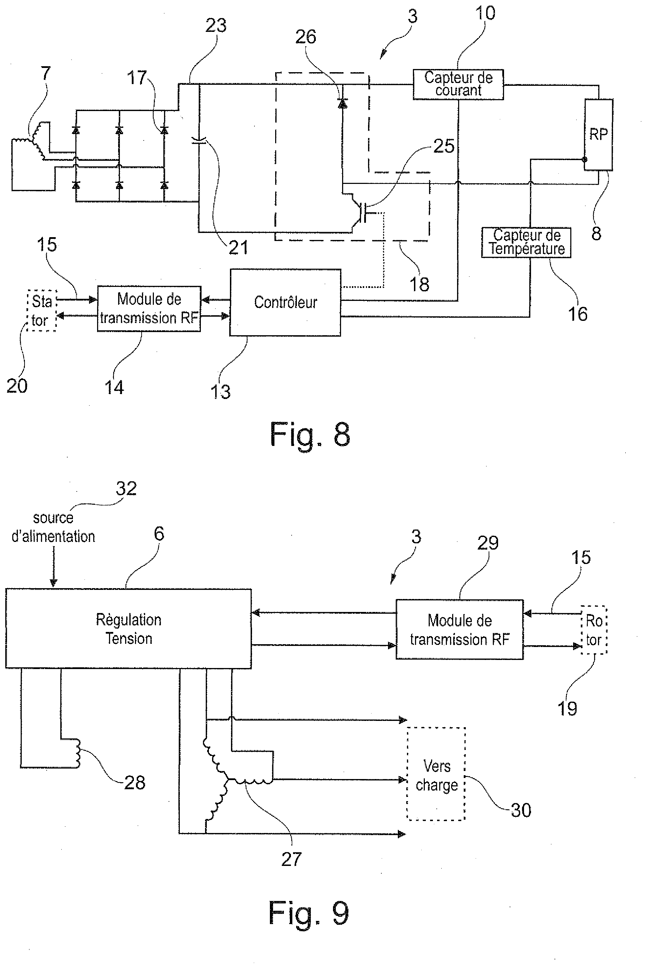

Dans la variante représentée aux figures 8 et 9, le rotor comporte un système de communication embarqué, et le bus continu 23 est relié à un système de commutation 18. Un condensateur de filtrage 21 peut être prévu.

Le système de commutation 18 peut être composé, par exemple, comme illustré, d'une diode de roue libre 26 et d'un composant électronique commutable 25, par exemple un transistor IGBT.

Un contrôleur 13 commande le système de commutation 18 de façon à réguler par modulation de largeur d'impulsion, dans l'exemple du montage à IGBT, le courant dans la roue polaire 8. Le rapport cyclique $\beta$ de la modulation de largeur d'impulsion est fonction de la tension de sortie de la machine principale, de façon à maintenir autant que possible la tension délivrée par l'alternateur 3 à la valeur souhaitée.

Le rotor comporte dans l'exemple illustré un capteur de courant 10 pour mesurer le courant dans la roue polaire 8. La valeur du courant ainsi mesurée est transmise au contrôleur 13.

Le stator 20 est alimenté par une alimentation 32, et l'inducteur d'excitatrice 28 est bobiné, dans l'exemple décrit. Un système de communication sans fil HF est disposé entre le contrôleur 13 du rotor et le régulateur de tension 6 du stator 20 de l'alternateur 3. Le système de communication sans fil est composé d'un module de transmission 14 disposé au rotor, d'un module de transmission 29 disposé au stator 20, et de voies de transmission sans fil 15 reliant lesdits modules.

La valeur du courant dans la roue polaire 8, mesurée par le capteur de courant 10 du rotor 19, est transmise au régulateur de tension 6 du stator 20 par le système de communication sans fil 14, 15, 29.

L'invention n'est pas limitée aux exemples qui viennent d'être décrits. Par exemple, l'excitatrice est à aimants permanents, dans une variante de la figure 9.

**Revendications**

1. Procédé de régulation de la tension (*U*) de sortie de l'alternateur (3) d'un groupe électrogène (1), ce dernier comportant un moteur thermique (2) comportant un régulateur de vitesse (4) et entraînant ledit alternateur, l'alternateur (3) comportant un rotor (19) ayant une roue polaire (8), le procédé utilisant un système de régulation et étant **caractérisé en ce qu'**il comporte l'étape suivante :

   - modifier, au moins lors d'une augmentation de la charge en sortie de l'alternateur (3), le courant dans la roue polaire (8), de manière à amener brutalement la tension (*U*) de sortie de l'alternateur (3) à une tension de consigne de l'alternateur, inférieure à celle avant augmentation de la charge, la modification du courant dans la roue polaire (8) étant fonction de la décélération du moteur thermique (2),

   le régulateur de vitesse (4) du moteur thermique ayant un fonctionnement totalement autonome du système de régulation de la tension (*U*) de sortie de l'alternateur (3).

2. Procédé selon la revendication précédente, dans lequel la modification de la valeur du courant dans la roue polaire (8) conduit à une augmentation de la vitesse de rotation (w) du moteur thermique (2) du fait de la diminution de la tension (*U*) de sortie de l'alternateur (3) et dans lequel on modifie de nouveau la valeur du courant dans la roue polaire (8), de manière à ramener la valeur de la tension (*U*) de sortie à celle avant augmentation de la charge (30).

3. Procédé selon l'une des revendications précédentes, le moteur thermique (2) étant un moteur turbocompressé.

4. Procédé selon l'une quelconque des revendications 1 à 3, l'augmentation de la charge correspondant à un ralentissement du moteur en deçà d'une vitesse prédéfinie.

5. Procédé selon la revendication 4, la vitesse prédéfinie étant, par exemple, la vitesse nominale moins 4%, notamment une fréquence de la tension de 48 Hz pour une vitesse nominale correspondant à une fréquence nominale de 50 Hz.

6. Procédé selon l'une quelconque des revendications précédentes, la modification du courant de la roue polaire (8) s'effectuant en diminuant le courant d'excitation de l'excitatrice.

7. Procédé selon l'une quelconque des revendications 1 à 5, la modification du courant de la roue polaire (8) s'effectuant par exemple grâce à une modulation de largeur d'impulsion de la tension aux bornes de la roue polaire.

8. Procédé selon l'une quelconque des revendications 1 à 7, l'écart entre la tension de consigne ($U_c$) et la tension nominale ($U_n$) étant proportionnel à la décélération.

9. Système de régulation de la tension (*U*) de sortie de l'alternateur (3) d'un groupe électrogène (1), ce dernier comportant un moteur thermique (2) comportant un régulateur de vitesse (4) et entraînant ledit alternateur (3), l'alternateur comportant un rotor (19) ayant une roue polaire (8), le système étant **caractérisé en ce qu'**il est configuré pour modifier, au moins lorsque la charge augmente en sortie de l'alternateur (3), la valeur du courant dans la roue polaire (8), de manière à amener brutalement la tension (*U*) de sortie de l'alternateur (3) à une tension de consigne, inférieure à celle avant augmentation de la charge, la modification de la valeur du courant dans la roue polaire (8) étant fonction de la dérivée d'une grandeur représentative de la vitesse de rotation du moteur thermique (2),

le régulateur de vitesse (4) du moteur thermique ayant un fonctionnement totalement autonome du système de régulation de la tension (*U*) de sortie de l'alternateur (3).

10. Système selon la revendication 9, la tension de consigne étant choisie de telle sorte que l'écart entre la tension nominale ($U_n$) et la tension de consigne ($U_c$) soit fonction au moins de la décélération du moteur (2).

11. Système selon la revendication 9 ou 10, étant configuré pour appliquer la baisse de tension quand l'augmentation de la charge appliquée correspond à une diminution de la fréquence de la tension en deçà d'une valeur prédéfinie, par exemple la fréquence nominale moins 4%.


**Patentansprüche**

1. Verfahren zur Regelung der Ausgangsspannung (U) des Generators (3) eines Stromerzeugungsaggregats (1), wobei Letzteres einen Verbrennungsmotor (2) umfasst, der einen Geschwindigkeitsregler (4) umfasst und den Generator antreibt, wobei der Generator (3) einen Rotor (19) umfasst, der ein Polrad (8) besitzt, wobei das Verfahren ein Regelungssystem einsetzt und **dadurch gekennzeichnet ist, dass** es den folgenden Schritt umfasst:

   - Ändern, zumindest bei einem Anstieg der Last im Ausgang des Generators (3), des Stroms im Polrad (8) derart, dass die Ausgangsspannung (U) des Generators (3) abrupt auf eine Sollspannung des Generators geführt wird, die geringer als die vor dem Anstieg der Last ist, wobei die Änderung des Stroms im Polrad (8) von der Verzögerung des Verbrennungsmotors (2) abhängig ist,

   wobei der Geschwindigkeitsregler (4) des Verbrennungsmotors einen vom System zur Regelung der Ausgangsspannung (U) des Generators (3) vollkommen unabhängigen Betrieb aufweist.

2. Verfahren nach dem vorhergehenden Anspruch, wobei die Änderung des Werts des Stroms im Polrad (8) aufgrund der Verringerung der Ausgangsspannung (U) des Generators (3) zu einem Anstieg der Drehzahl (w) des Verbrennungsmotors (2) führt und wobei der Wert des Stroms im Polrad (8) erneut derart geändert wird, dass der Wert der Ausgangsspannung (U) wieder auf den vor dem Anstieg der Last (30) zurückgeführt wird.

3. Verfahren nach einem der vorhergehenden Ansprüche, wobei der Verbrennungsmotor (2) ein Turbomotor ist.

4. Verfahren nach einem der Ansprüche 1 bis 3, wobei der Anstieg der Last einer Verlangsamung des Motors unter eine vorgegebene Geschwindigkeit entspricht.

5. Verfahren nach Anspruch 4, wobei die vorgegebene Geschwindigkeit beispielsweise die Nenngeschwindigkeit abzüglich 4 % ist, insbesondere eine Frequenz der Spannung von 48 Hz bei einer Nenngeschwindigkeit, die einer Nennfrequenz von 50 Hz entspricht.

6. Verfahren nach einem der vorhergehenden Ansprüche, wobei die Änderung des Stroms des Polrades (8) erfolgt, indem der Erregerstrom der Erregermaschine verringert wird.

7. Verfahren nach einem der Ansprüche 1 bis 5, wobei die Änderung des Stroms des Polrades (8) beispielsweise dank einer Pulsweitenmodulation der Spannung an den Klemmen des Polrades erfolgt.

8. Verfahren nach einem der Ansprüche 1 bis 7, wobei die Differenz zwischen der Sollspannung ($U_c$) und der Nennspannung ($U_n$) proportional zur Verzögerung ist.

9. System zur Regelung der Ausgangsspannung (U) des Generators (3) eines Stromerzeugungsaggregats (1), wobei Letzteres einen Verbrennungsmotor (2) umfasst, der einen Geschwindigkeitsregler (4) umfasst und den Generator (3) antreibt, wobei der Generator einen Rotor (19) umfasst, der ein Polrad (8) aufweist, wobei das System **dadurch gekennzeichnet ist, dass** es dazu ausgelegt ist, den Wert des Stroms im Polrad (8) zumindest bei einem Anstieg der Last im Ausgang des Generators (3) derart zu ändern, dass die Ausgangsspannung (U) des Generators (3) abrupt auf eine Sollspannung geführt wird, die geringer als die vor dem Anstieg der Last ist, wobei die Änderung des Werts des Stroms im Polrad (8) von der Ableitung einer für die Drehzahl des Verbrennungsmotors (2) repräsentativen Größe abhängig ist,

wobei der Geschwindigkeitsregler (4) des Verbrennungsmotors einen vom System zur Regelung der Ausgangsspannung (U) des Generators (3) vollkommen unabhängigen Betrieb aufweist.

**10.** System nach Anspruch 9, wobei die Sollspannung so gewählt ist, dass die Differenz zwischen der Nennspannung ($U_n$) und der Sollspannung ($U_c$) zumindest von der Verzögerung des Motors (2) abhängig ist.

**11.** System nach Anspruch 9 oder 10, das dazu ausgelegt ist, die Spannungsabsenkung anzuwenden, wenn der Anstieg der angelegten Last einer Verringerung der Frequenz der Spannung unter einen vorgegebenen Wert entspricht, beispielsweise der Nennfrequenz abzüglich 4 %.


**Claims**

**1.** Method for regulating the output voltage (U) of the alternator (3) of a generator set (1), the latter comprising an engine (2) comprising a speed regulator (4) and driving said alternator, the alternator (3) comprising a rotor (19) having a pole wheel (8), the method using a regulation system and **characterized in that** it comprises the following step:

- modifying, at least upon an increase in the load at the output of the alternator (3), the current in the pole wheel (8), so as to bring the output voltage (U) of the alternator (3) to a set point voltage of the alternator below that before increase in the load, the modification of the current in the pole wheel (8) being dependent on the deceleration of the engine (2),

the engine speed regulator (4) having an operation totally autonomous from the regulating system of the output voltage (U) of the alternator (3).

**2.** Method according to the preceding claim, in which the modification of the value of the current in the pole wheel (8) leads to an increase in the rotation speed ($w$) of the engine (2) on account of the decrease in the output voltage (U) of the alternator (3) and in which the value of the current in the pole wheel (8) is modified again, so as to bring the value of the output voltage (U) back to that before increase in the load (30).

**3.** Method according to one of the preceding claims, the engine (2) being a turbocharged engine.

**4.** Method according to any one of Claims 1 to 3, the increase in the load corresponding to a slowing of the engine below a predefined speed.

**5.** Method according to Claim 4, the predefined speed being, for example, the nominal speed less 4%, especially a frequency of the voltage of 48 Hz for a nominal speed corresponding to a nominal frequency of 50 Hz.

**6.** Method according to any one of the preceding claims, the modification of the current of the pole wheel (8) being performed by decreasing the exciter excitation current.

**7.** Method according to any one of Claims 1 to 5, the modification of the current of the pole wheel (8) being performed for example by virtue of a pulse width modulation of the voltage across the terminals of the pole wheel.

**8.** Method according to any one of Claims 1 to 7, the discrepancy between the setpoint voltage ($U_c$) and the nominal voltage ($U_n$) being proportional to the deceleration.

**9.** System for regulating the output voltage ($U$) of the alternator (3) of a generator set (1), the latter comprising an engine (2) comprising a speed regulator (4) and driving said alternator (3), the alternator comprising a rotor (19) having a pole wheel (8), the system being **characterized in that** it is configured to modify, at least when the load increases at the output of the alternator (3), the value of the current in the pole wheel (8), so as to bring the output voltage ($U$) of the alternator (3) to a setpoint voltage below that before increase in the load, the modification of the value of the current in the pole wheel (8) being dependent on the derivative of a quantity representative of the rotation speed of the engine (2), the engine speed regulator (4) having an operation totally autonomous from the regulating system of the output voltage ($U$) of the alternator (3).

**10.** System according to Claim 9, the setpoint voltage being chosen in such a way that the discrepancy between the nominal voltage ($U_n$) and the setpoint voltage ($U_c$) is dependent at least on the deceleration of the engine (2).

**11.** System according to Claim 9 or 10, being configured to apply the voltage reduction when the increase in the load applied corresponds to a decrease in the frequency of the voltage below a predefined value, for example the nominal frequency less 4%.

Fig. 1

Fig. 2

ETAT DE LA TECHNIQUE

Fig. 3

ETAT DE LA TECHNIQUE

## Fig. 4

## Fig. 5

Fig. 6

Fig. 7

Fig. 8

Fig. 9

**EP 2 751 924 B1**

## RÉFÉRENCES CITÉES DANS LA DESCRIPTION

### Documents brevets cités dans la description

- US 5703410 A
- EP 1938447 A
- FR 2321796
- US 20070228735 A1